# NEUE EUROPÄISCHE PATENTSCHRIFT

(11) **EP 3 689 698 B2**
(45) Veröffentlichungstag und Bekanntmachung des Hinweises auf die Entscheidung über den Einspruch: **25.03.2026**
(45) Hinweis auf die Patenterteilung: 07.06.2023
(21) Anmeldenummer: 20157844.0
(22) Anmeldetag: 25.01.2012
(51) Int. Cl.: B60W 30/14, B60W 30/04

(54) **SCHLEPPER**
TOWER
REMORQUEUR

(30) Priorität: 25.02.2011 DE 102011012418
(43) Veröffentlichungstag der Anmeldung: 05.08.2020
(62) Teilanmeldung aus: 12152442.5
(73) Patentinhaber: STILL GmbH, 22113 Hamburg (DE)
(72) Erfinder: CLAUS, Alexander, 22303 Hamburg (DE)
(74) Vertreter: Patentship Patentanwaltgesellschaft

(56) Entgegenhaltungen:
- EP-A1- 1 302 357
- EP-A1- 3 689 698
- EP-A2- 0 343 839
- EP-B1- 1 212 221
- WO-A1-2004/009396
- WO-A1-2011/063823
- DE-A1- 102009 022 170
- DE-A1- 2 629 360
- DE-A1- 3 736 807
- GB-A- 2 559 170
- JP-A- 2002 340 182
- JP-A- 2008 265 602
- JP-A- H05 199 620
- JP-A- H06 135 260
- US-A- 5 070 959
- US-A- 5 070 959
- US-A- 5 995 895
- US-A1- 2003 088 354
- US-A1- 2004 068 359
- US-A1- 2008 039 990
- US-A1- 2010 250 073
- US-A1- 2010 332 049
- US-B1- 6 240 356
- US-B1- 7 216 024

## Beschreibung

Die Erfindung betrifft einen Schlepper mit einer Ladefläche und einer Anhängevorrichtung für zumindest einen Anhänger mit den Merkmalen des Oberbegriffs des Patentanspruchs 1.

Ein als LKW ausgebildeter gattungsgemäßer Schlepper ist aus der US 2004/0068359 A1 bekannt.

Der innerbetriebliche Warentransport und Materialfluss, insbesondere die Materialversorgung von Produktionslinien in Produktionsbetrieben, erfolgt in der Regel mittels Anhängern, auf denen die zu transportierenden Waren, insbesondere mittels Transportbehälter, Paletten oder Gitterboxen, innerhalb des Produktionsbetriebes transportiert werden.

Zum Ziehen eines oder mehrerer dieser Anhänger werden als Schlepper ausgebildete Lagertechnikflurförderzeuge verwendet, die mit einer entsprechenden Anhängevorrichtung vorgesehen sind, an die ein oder mehrere Anhänger angehängt werden können. Derartige Schlepper weisen kompakte Abmessungen auf, durch die Transportanhänger innerhalb eines Produktionsbetriebes auf beengten Transportwegen sicher transportiert werden können.

Derzeit werden Schlepper in der Intralogistik in allen Betriebsbereichen eingesetzt. Dabei werden sowohl Außenbereiche als auch Innenbereiche befahren. Es werden Steigung- und Gefällefahrten absolviert und verschiedene Lasten auf an die Anhängevorrichtung angehängten Anhängern und auf der Ladefläche des Schleppers selbst transportiert.

Bei allen Einsatzfällen ist der Fahrer bisher bei der Aufgabe, die Geschwindigkeit des Schleppers so zu wählen, dass in Abhängigkeit von Last und Bodenprofil ein sicheres Fahren und ein rechtzeitiges Abbremsen möglich ist, auf sich gestellt. Der Fahrer hat in der Praxis häufig nicht die Möglichkeit, die komplette Last und/oder das Bodenprofil zu ermitteln oder genannt zu bekommen, um in Abhängigkeit von diesen Bedingungen eine entsprechend sichere Höchstgeschwindigkeit wählen zu können. Daher wird häufig eine zu hohe Geschwindigkeit gewählt, so dass ein Unfallrisiko für den Fahrer, umstehende Personen, Gebäude, Einrichtungen und der beistehenden oder zu transportierenden Ware besteht. Wird eine zu niedrige Geschwindigkeit gewählt, ist das Transportieren weniger effektiv und produktiv als möglich. Um einen möglichst sicheren und gleichzeitig effektiven Transport zu erreichen, sind die Fahrer oft gut ausgebildet.

Viele an dem Schlepper angehängte Anhänger sind aufgrund der üblichen betrieblichen Anwendung verschmutzt oder so beschädigt, dass die Leergewichte nicht mehr ermittelt werden können. Gleiches gilt für Transportbehälter, die auf den Anhängern transportiert werden. Das Gewicht der zu transportierenden Ware ist ebenfalls nicht auf einfache Weise zu ermitteln, da diese Toleranzen unterliegen. Somit ist es für den Fahrer solcher Schlepper oft nicht möglich, die tatsächliche Last, die es zu verziehen bzw. zu transportieren gilt, zu ermitteln.

Ähnlich verhält es sich auch mit den Gefälle- bzw. Steigungsstrecken, die überwunden werden müssen. Sehr häufig sind diese nicht mit den entsprechenden Werten ausgeschildert.

Selbst wenn der Fahrer die oben beschriebenen Rahmenbedingungen ermitteln könnte, müsste er über ein sehr komplexes Wissen verfügen, um daraus eine zulässige Höchstgeschwindigkeit für den Schlepper zu ermitteln.

Der vorliegenden Erfindung liegt die Aufgabe zugrunde, eine Möglichkeit bereitzustellen, die Fahrgeschwindigkeit eines Schleppers abhängig von Last und/oder Bodenprofil steuern zu können.

Diese Aufgabe wird durch einen Schlepper mit den Merkmalen des Patentanspruchs 1 gelöst.

Erfindungsgemäß ist ein als ein Lagertechnikflurförderzeug ausgebildeter Schlepper mit einer Steuerungseinrichtung zur Begrenzung einer Fahrgeschwindigkeit des Schleppers, einer Bodenprofilermittlungseinrichtung und insbesondere einer Lastermittlungseinrichtung vorgesehen, wobei die Lastermittlungseinrichtung eingerichtet ist, das Gewicht einer Last zu ermitteln und diese Information an die Steuerungseinrichtung weiterzugeben, die Bodenprofilermittlungseinrichtung einge²richtet ist, ein aktuelles Bodenprofil zu ermitteln und diese Information an die Steuerungseinrichtung weiterzugeben, und die Steuerungseinrichtung eingerichtet ist, die Fahrgeschwindigkeit des Schleppers abhängig von einem durch die Bodenprofilermittlungseinrichtung ermittelten Bodenprofil und insbesondere von einer durch die Lastermittlungseinrichtung ermittelten Last auf eine maximal zulässige Fahrgeschwindigkeit zu begrenzen.

Eine Steuerungseinrichtung zur Reduzierung bzw. Begrenzung und somit zur Anpassung und Beeinflussung einer Fahrgeschwindigkeit des Schleppers ist eine Einrichtung, die geeignet ist, einen bestimmten Zielwert für die maximale Geschwindigkeit des Schleppers vorzugeben. Vorzugsweise ist der Zielwert dadurch vorgebbar, dass ein Hinweis an einen Bediener des Schleppers gegeben wird. Besonders bevorzugt ist der Zielwert dadurch vorgebbar, dass in die Fahrzeugsteuerung des Schleppers zur Anpassung der Fahrgeschwindigkeit eingegriffen wird.

Eine Lastermittlungseinrichtung ist eine Einrichtung, durch die das Gewicht einer zu transportierenden bzw. verziehenden Last bestimmbar ist. Zu transportierende bzw. verziehende Lasten können Lasten sein, die an dem Schlepper selbst vorgesehen sind, beispielsweise auf der Ladefläche, an den Schlepper angehängte Anhänger (Leergewicht) und/oder sich auf einem oder mehreren angehängten Anhängern befindliche Lasten. Eine Lastermittlungseinrichtung kann beispielsweise eine Waage umfassen.

Eine Lastermittlungseinrichtung ist in einer Ausführungsform eingerichtet, die Last mit Hilfe von Motorströmen, einer Motorkennlinie, der Fahrzeugneigung und/oder eines Zugkraftdiagramms zu ermitteln. Ein Zugkraftdiagramm stellt den Verlauf von Fahrwiderständen und ihrer Summe und den Verlauf der Antriebskraft in Abhängigkeit von der Fahrgeschwindigkeit dar. Bei einem Schlepper mit einem elektrischen Fahrantrieb kann hierdurch die von dem Schlepper transportierte bzw. angehängte Last auf einfache Weise ermittelt werden.

Eine Bodenprofilermittlungseinrichtung ist eine Einrichtung, die geeignet ist, das aktuelle Bodenprofil auf dem der Schlepper sich befindet, zu ermitteln. Bestandteile des Bodenprofils können beispielsweise Steigungen, Gefälle oder Unebenheiten sein. Vorzugsweise ist die Bodenprofilermittlungseinrichtung auch eingerichtet, festzustellen, ob sich der Schlepper auf einer Ebene befindet. Vorzugsweise ist die Bodenprofilermittlungseinrichtung geeignet, das Bodenprofil in Abhängigkeit von der Fahrtrichtung des Schleppers zu ermitteln. Dadurch kann auf einfache Weise bestimmt werden, ob sich der Schlepper beispielsweise auf einer Steigungs- oder Gefällestrecke befindet. Vorzugsweise ist die Bodenprofilermittlungseinrichtung geeignet, die Neigung eines Schleppers in Fahrtrichtung zu bestimmen.

Erfindungsgemäß weist die Bodenprofilermittlungseinrichtung einen Winkelsensor zur Ermittlung der Lage des Schleppers relativ zur Lotrechten auf. Dadurch kann auf einfache Weise die jeweils aktuelle Lage des Schleppers bestimmt werden.

Als Winkelsensor kann ein elektronischer Neigungsmesser eingesetzt werden. Vorzugsweise wird ein Höhenkompensator, ein kapazitiver Flüssigkeitsneigungssensor oder eine Elektrolytlibelle eingesetzt.

Gemäß einer bevorzugten Ausführungsform der Erfindung umfasst die Steuerungseinrichtung einen visuellen Signalgeber. Dadurch ist es möglich, einem Bediener einen Hinweis auf eine maximal zulässige Geschwindigkeit des Schleppers und/oder eine Überschreitung der maximal zulässigen Geschwindigkeit des Schleppers zu geben, ohne dabei andere sich möglicherweise in der Nähe befindliche Personen abzulenken.

Ein visueller Signalgeber ist ein Signalgeber, der geeignet ist, ein Signal abzugeben, das von einem Bediener des Schleppers mit einem Auge wahrgenommen werden kann. Vorzugsweise ist ein visueller Signalgeber eine Lampe oder ein Display. Das Signal kann beispielsweise durch ein Blinken, Aufleuchten oder eine Farbänderung des Signalgebers gegeben werden. Besonders bevorzugt kann das Signal durch die Anzeige einer maximal zulässigen Geschwindigkeit in einem Display gegeben werden. Gemäß einer vorteilhaften Weiterbildung der Erfindung umfasst die Steuerungseinrichtung einen akustischen Signalgeber. Dadurch ist es möglich, einem Bediener unabhängig von dessen Blickrichtung ein Signal zu geben.

Ein akustischer Signalgeber ist ein Signalgeber, der geeignet ist, ein Signal abzugeben, das von einem Bediener des Schleppers mit einem Ohr wahrgenommen werden kann. Vorzugsweise ist ein akustischer Signalgeber eine Hupe oder ein Lautsprecher.

Bevorzugt umfasst die Steuerungseinrichtung eine mit einem Fahrantrieb in Wirkverbindung stehende Automatik. Dadurch ist es möglich, die Geschwindigkeit des Schleppers auch dann zu begrenzen bzw. zu reduzieren, wenn ein Bediener Signale nicht beachtet.

Eine derartige Automatik ist eine Einrichtung, die ohne Eingreifen eines Bedieners Abläufe durchführen kann. Die Automatik ist vorzugsweise eingerichtet, die Fahrgeschwindigkeit des Schleppers zu reduzieren bzw. begrenzen, wobei notfalls gegenteilige Eingaben eines Bedieners ignoriert werden.

Gemäß einer bevorzugten Ausführungsform der Erfindung ist die Steuerungseinrichtung eingerichtet, festzustellen, ob die aktuelle Fahrgeschwindigkeit die maximal zulässige Fahrgeschwindigkeit überschreitet und wenn die zulässige Höchstgeschwindigkeit überschritten ist in einem ersten Schritt, den visuellen Signalgeber zu veranlassen, ein Signal abzugeben, wenn danach die zulässige Höchstgeschwindigkeit noch immer überschritten ist, in einem zweiten Schritt, den akustischen Signalgeber zu veranlassen, ein Signal abzugeben, und wenn danach die zulässige Höchstgeschwindigkeit noch immer überschritten ist, in einem dritten Schritt eine automatische Begrenzung der Fahrgeschwindigkeit durch die Automatik zu veranlassen. Dadurch ist es möglich, einem Bediener zunächst die Kontrolle über den Schlepper zu überlassen und erst dann automatisch in die Schleppersteuerung einzugreifen, wenn der Bediener sowohl das visuelle als auch das akustische Signal nicht beachtet hat. Dadurch wird vermieden, dass ein Bediener von plötzlichen Geschwindigkeitsänderungen überrascht wird und möglicherweise den Halt verliert oder den Schlepper in Zusammenhang mit anderen Flurförderzeugen in eine Situation bringt, in der bei einer plötzlichen Geschwindigkeitsänderung eine Kollision provoziert wird.

Bevorzugt gibt die Steuerungseinrichtung bei einer automatischen Begrenzung der Fahrgeschwindigkeit durch die Automatik ein Ansteuersignal an ein Bremslicht des Schleppers aus. Bei der automatischen Verringerung der Fahrgeschwindigkeit kann durch ein Bremslicht ein entsprechendes Bremssignal erzeugt werden, das Bedienern von nachfolgenden Flurförderzeugen den Bremsvorgang des Schleppers anzeigt.

Bevorzugt ist die Lastermittlungseinrichtung eingerichtet, eine Kraft in einer Anhängevorrichtung, insbesondere einer Anhängerkupplung, des Schleppers zu messen. Dadurch kann auf einfache Weise die Last, d.h. das Leergewicht, der angehängten Anhänger mit deren Ladung bestimmt werden. Beim Befahren einer Steigung bzw. eines Gefälles entspricht der Quotient von in der Anhängevorrichtung gemessener Kraft und Gewichtskraft dem Sinus der Hangsteigung. Die Gewichtskraft ist dabei die Kraft, die die an dem Schlepper angehängten Anhänger mitsamt ihrer Ladung in die Lotrechte ausüben. Die Hangsteigung ist der Winkel zwischen der Fahrstrecke und einer Horizontalen.

Vorzugsweise ist ein analoger oder inkrementeller Wegsensor, ein Dehnungsmessstreifen, ein piezoresistiver Drucksensor, ein piezoelektrischer Drucksensor, ein Drucksensor im Vakuumbereich, ein frequenzanaloger Drucksensor, ein Drucksensor mit Hallelement, ein kapazitiver Drucksensor oder ein induktiver Drucksensor an der Anhängevorrichtung als Lastermittlungsvorrichtung vorgesehen.

Gemäß einer vorteilhaften Weiterbildung der Erfindung ist die Lastermittlungseinrichtung eingerichtet, eine Kraft zu messen, die eine Last auf eine Ladefläche des Schleppers ausübt. Dadurch ist es möglich, auf einfache Weise das Gewicht einer sich auf der Ladefläche des Schleppers befindlichen Last zu bestimmen.

Vorzugsweise ist die Ladefläche des Schleppers so angebracht, dass deren Gewicht auf einem Drucksensor oder einem Dehnungsmessstreifen lastet. Der Drucksensor ist vorzugsweise ein piezoresistiver Drucksensor, ein piezoelektrischer Drucksensor, ein Drucksensor im Vakuumbereich, ein frequenzanaloger Drucksensor, ein Drucksensor mit Hallelement, ein kapazitiver Drucksensor oder ein induktiver Drucksensor.

Vorzugsweise ist eine Informationsverarbeitungseinrichtung eingerichtet, aus dem von dem Drucksensor gemessenen Druck bzw. dem von dem Dehnungsmessstreifen erfassten Signal ein Gewicht der auf der Ladefläche des Schleppers befindlichen Last zu bestimmen.

Gemäß einer vorteilhaften Weiterbildung der Erfindung weist die Bodenprofilermittlungseinrichtung einen Empfänger für ein Ortungssystem zum Empfangen von Positionsinformationen auf und ist eingerichtet, mit Hilfe der empfangenen Positionsinformationen einen Ausschnitt eines Bodenprofils aus einem Speicher abzurufen. Dadurch können die Bodenprofildaten auf einfachere Weise bereitgestellt werden, da sie nur einmal ermittelt werden müssen. Bei Flurförderzeuge, die innerhalb von geschlossenen Gebäuden und im Freien eingesetzt werden, kommen als Ortungssysteme Systeme zum Einsatz, die unter Verwendung von RFID-Transpondern, Bar-Code-Markierungen, optischen Markierungen oder Lichtquellen eine Positionsbestimmung ermöglichen.

Die Positionsinformationen werden vorzugsweise durch einen in dem Schlepper vorgesehen Empfänger eines Ortungssystems ermittelt.

Vorzugsweise befindet sich der Speicher in dem Schlepper. Der Speicher kann sich aber auch an einem anderen Ort befinden, wobei dann vorzugsweise sowohl der Speicher als auch der Schlepper mit einem Sender und einem Empfänger verbunden sind, um die Daten auf einfache Weise abrufen zu können.

Besondere Vorteile sind erzielbar, wenn die Steuerungseinrichtung eingerichtet ist, die Fahrgeschwindigkeit des Schleppers abhängig von der Beschaffenheit der Fahrbahnoberfläche zu steuern. Dadurch ist es möglich, die maximale Fahrgeschwindigkeit besonders exakt zu bestimmen.

Die Beschaffenheit der Fahrbahnoberfläche umfasst vorzugsweise Unebenheiten der Fahrbahnoberfläche wie Bodenwellen. Besonders bevorzugt umfasst die Beschaffenheit der Fahrbahnoberfläche die Haftreibung, Gleitreibung und/oder Rollreibung, die die Fahrbahnoberfläche in Zusammenwirkung mit den Rädern des Schleppers erzeugen kann.

Für Haftreibung, Gleitreibung und/oder Rollreibung können unter anderem konstante Werte eingesetzt werden.

Vorzugsweise können die Daten zur Beschaffenheit der Fahrbahnoberfläche anhand von Positionsdaten aus einem Speicher abgerufen werden. Der Speicher kann in dem Schlepper selbst oder an einem anderen Ort vorgesehen sein. Wenn der Speicher an einem anderen Ort vorgesehen ist, sind vorzugsweise sowohl der Speicher als auch der Schlepper mit einem Sender und einem Empfänger verbunden, um die Daten auf einfache Weise abrufen zu können.

Haftreibung, Gleitreibung und/oder Rollreibung können auch durch im Schlepper befindliche Sensoren ermittelt werden. Bei steigender Haftreibungszahl oder Gleitreibungszahl kann eine höhere Fahrzeuggeschwindigkeit zugelassen werden. Bei steigendem Rollwiderstandskoeffizienten kann die zulässige Fahrzeuggeschwindigkeit vermindert werden.

Weitere Vorteile und Einzelheiten der Erfindung werden anhand der in den schematischen Figuren dargestellten Ausführungsbeispiele näher erläutert. Hierbei zeigt
- Figur 1: eine Seitenansicht eines Schleppers,
- Figur 2: eine Seitenansicht einer Schlepperzuges an einer Steigung und
- Figur 3: eine obere Grafik, die die zulässige Fahrgeschwindigkeit und Fahrstrecke je Stunde in Abhängigkeit von der Zugkraft zeigt und eine untere Grafik, die die maximale Steigung in Abhängigkeit der Anhängelast, sowie den Zusammenhang zwischen Steigung, Anhängelast und Zugkraft zeigt.

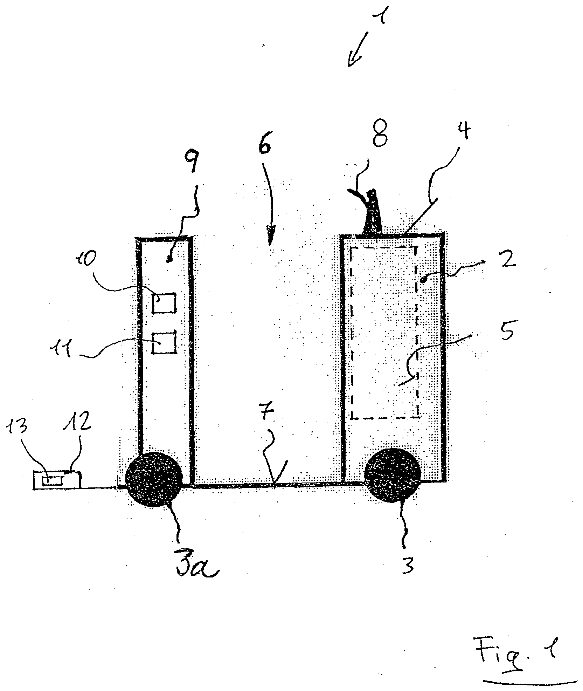

Die Figur 1 zeigt eine Seitenansicht eines erfindungsgemäßen Schleppers 1. Der Schlepper 1 weist in Fahrzeuglängsrichtung gesehen einen frontseitigen Antriebsteil 2 auf, in dem zumindest ein lenkbares Antriebsrad 3 angeordnet ist. Auf dem frontseitigen Antriebsteil 2 ist ein Display 4 angeordnet. Der Schlepper 1 weist beispielsweise ein elektrisches Antriebssystem mit einem elektrischen Fahrantrieb auf. Der Fahrantrieb umfasst einen in dem Antriebsteil 2 angeordneten und nicht mehr dargestellten, mit dem Antriebsrad 3 in Wirkverbindung stehenden elektrischen Fahrantriebsmotor. Als Lenkantrieb kann ein elektrischer Lenkmotor vorgesehen sein. In dem Antriebsteil 2 ist ein Batteriefach 5 angeordnet, in dem eine Energieversorgungseinrichtung des elektrischen Antriebssystems angeordnet werden kann, beispielsweise ein Batterieblock. Anschließend an das Antriebsteil 2 und das Batteriefach 5 weist der Schlepper 1 einen Fahrerplatz 6 auf, der im dargestellten Ausführungsbeispiel von einer Standplattform 7 gebildet ist.

Es ist alternativ möglich, den Schlepper 1 mit einer Brennstoffzelle als elektrische Energieversorgungseinheit zu versehen. Zudem kann der Schlepper 1 ein verbrennungsmotorisches Antriebssystem mit einem Verbrennungsmotor aufweisen.

Zur Bedienung des Schleppers 1 ist eine lenkerähnliche Bedienungsanordnung 8 vorgesehen, die an der Oberseite des Antriebsteils 2 angeordnet ist. Heckseitig grenzt ein Rahmenabschnitt 9 den Fahrerplatz 6 ab. Dieser heckseitige Rahmenabschnitt 9 ist mit Lasträdern 3a versehen.

Alternativ zu dem dargestellten Schlepper 1 können die heckseitigen Lasträder 3a als Antriebsräder und ein oder zwei frontseitige, nicht-angetriebene gelenkte Räder 3 vorgesehen sein.

Der erfindungsgemäße Schlepper 1 ist mit einer Bodenprofilermittlungseinrichtung 10, 11 ausgestattet, die bevorzugt einen Fahrtrichtungsneigungssensor 10 und/oder einen Lateralneigungssensor 11 umfasst.

Außerdem weist der Schlepper 1 eine als Anhängerkupplung ausgebildete Anhängevorrichtung 12 auf, mit der der Schlepper 1 mit einem oder mehreren nicht dargestellten Anhängern verbunden werden kann. Der Anhängevorrichtung 12 ist eine Lastermittlungsvorrichtung 13 zugeordnet, die beispielsweise als ein in der Anhängevorrichtung 12 angeordneten kapazitiven Drucksensor oder Dehnungsmessstreifen ausgebildet ist.

Der Schlepper 1 ist mit einer Ladefläche versehen, um Lasten zu transportieren.

Dadurch dass der Schlepper 1 eine beispielsweise von dem Fahrtrichtungsneigungssensor 10 und den Lateralneigungssensor 11 gebildete Bodenprofilermittlungseinrichtung 10, 11 aufweist, kann die Lage des Schleppers 1 relativ zu einer Lotrechten auf einfache Weise bestimmt werden. Beispielsweise kann bestimmt werden, ob sich der Schlepper 1 an einer Steigung oder an einer Gefällestrecke befindet und wie stark die Steigung oder das Gefälle ist.

Dadurch, dass eine Lastermittlungsvorrichtung 13, beispielweise ein kapazitiver Drucksensor bzw. ein Dehnungsmessstreifen, in der Anhängevorrichtung 12 vorgesehen ist, kann die aktuelle Anhängelast bestimmt werden. Die Anhängelast ergibt sich aus der Kraft, die an die Anhängevorrichtung 12 angehängte Anhänger auf die Anhängevorrichtung 12 ausüben. Diese Kraft steigt durch auf den Anhängern befindliche Lasten und durch das Befahren von Steigungsstrecken an.

Eine nicht näher gezeigte Steuerungseinrichtung kann basierend auf den durch den Lastermittlungsvorrichtung 13 und den Fahrtrichtungsneigungssensor als Bodenprofilermittlungseinrichtung 10 ermittelten Daten eine maximal zulässige Geschwindigkeit ermitteln und bei Überschreiten dieser Geschwindigkeit das Display 4 veranlassen, ein visuelles und/oder akustisches Warnsignal abzugeben, beispielsweise in Form eines roten Hintergrunds und/oder eines Warntons. Die Steuerungseinrichtung steht weiterhin mit dem Fahrantrieb des Schleppers 11 in Verbindung, um die Fahrgeschwindigkeit basierend auf den durch den Lastermittlungsvorrichtung 13 und den Fahrtrichtungsneigungssensor als Bodenprofilermittlungseinrichtung 10 ermittelten Daten zu reduzieren bzw. zu begrenzen.

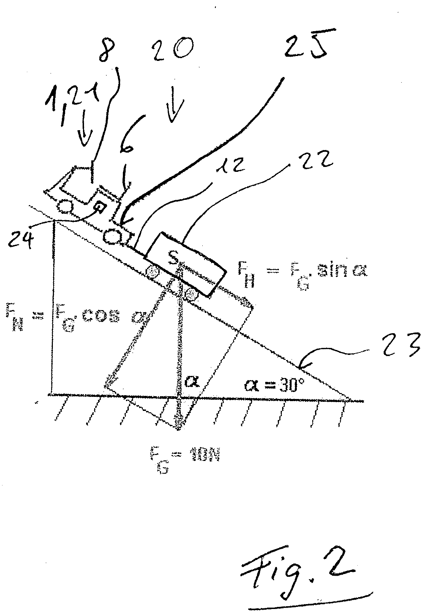

Die Figur 2 zeigt eine Seitenansicht eines Schlepperzuges 20 an einer Steigung. Der Schlepperzug 20 besteht aus einem erfindungsgemäßen Schlepper 21 und mindestens einem Anhänger 22. Der Schlepperzug 20 befindet sich auf einer Steigungsstrecke 23. Die Steigungsstrecke schließt mit einer Horizontalen einen Winkel α von beispielsweise 30° ein. Der in der Figur 2 dargestellte Schlepper 21 weist gegenüber dem in der Figur 1 dargestellten, einen Fahrerarbeitsplatz 6 mit einem Fahrersitz auf und ist zusätzlich im heckseitigen Bereich mit einer Ladefläche 25 versehen.

In dem Schlepper 21 ist ein Neigungswinkelsensor 24 als Bodenprofilermittlungseinrichtung vorgesehen. Der Schlepper 21 weist eine als Anhängerkupplung ausgebildete Anhängevorrichtung 12 mit einem nicht dargestellten Drucksensor auf. Der Anhänger 22 weist eine nicht dargestellte Anhängerkupplung auf, mit der er an die Anhängevorrichtung 12 des Schleppers 21 gekuppelt ist.

Der als Bodenprofilermittlungseinrichtung ausgebildete Neigungswinkelsensor 24 ist eingerichtet, die Steigung der Steigungsstrecke 23 zu bestimmen. Eine Lastermittlungseinrichtung der Anhängevorrichtung 12, beispielsweise ein Drucksensor oder Dehnungsmessstreifen, ist eingerichtet, die Kraft, die der Anhänger 22 auf die Anhängevorrichtung 12 ausübt, zu bestimmen. Die Gewichtskraft F_{G} des Anhängers 22 mit der transportierten Last lässt sich in zwei Komponenten aufteilen. Eine erste Komponente F_{N} verläuft senkrecht zur Steigungsstrecke 23 und wird von dem Anhänger 22 direkt auf die Steigungsstrecke 23 weitergegeben. Diese erste Komponente F_{N} lässt sich durch Multiplikation der Gewichtskraft F_{G} mit dem Kosinus des Winkels α zwischen der Steigungsstrecke 23 und einer Horizontalen bestimmen. Eine zweite Komponente F_{H} verläuft parallel zur Steigungsstrecke 23 und wird von der Anhängevorrichtung 12 des Schleppers 21 aufgenommen. Diese zweite Komponente F_{H} lässt sich durch Multiplikation der Gewichtskraft F_{G} mit dem Sinus des Winkels α zwischen der Steigungsstrecke 23 und einer Horizontalen bestimmen. Durch Messung dieser zweiten Komponente F_{H} in der Anhängevorrichtung 12 und Division des Ergebnisses durch den Sinus des Winkels α zwischen der Steigungsstrecke 23 und einer Horizontalen, der von dem Neigungswinkelsensor 24 ermittelt wird, kann die Gewichtskraft F_{G} bestimmt werden. Die Gewichtskraft F_{G} kann bei Kenntnis der Fahrzeugneigung α auch aus den Motorströmen und der Motorkennlinie des sich in dem Schlepper 21 befindlichen nicht gezeigten Antriebsmotors des elektrischen Fahrantriebs und aus dem Zugkraftdiagramm des Schleppers 21 bestimmt werden.

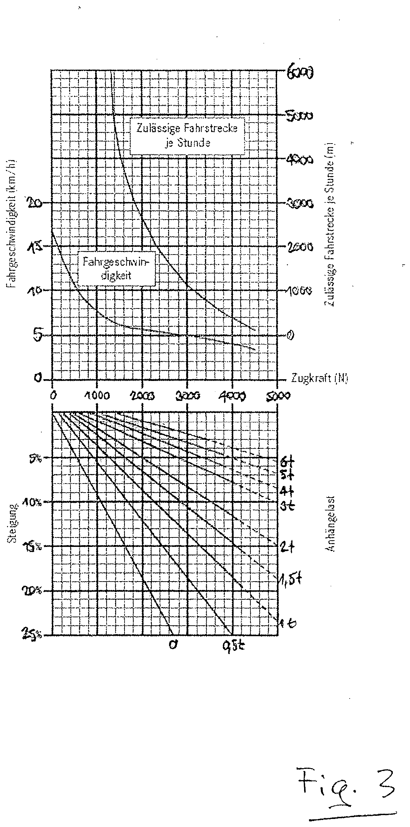

Die Figur 3 zeigt eine obere Grafik, die die zulässige Fahrgeschwindigkeit und Fahrstrecke je Stunde in Abhängigkeit von der Zugkraft zeigt. Diese Grafik zeigt, dass die zulässige Fahrgeschwindigkeit von beispielsweise 16,5 km/h bei einer Zugkraft von 0 N auf eine zulässige Fahrgeschwindigkeit von 3,5 km/h bei einer Zugkraft von 4500 N absinkt. Der Zusammenhang zwischen zulässiger Fahrgeschwindigkeit und Zugkraft ist dabei nicht über den gesamten dargestellten Bereich linear. In einem ersten Teilbereich zwischen einer Zugkraft von 0 N und 600 N sinkt die zulässige Fahrgeschwindigkeit zunächst annähernd linear auf 10 km/h ab. In einem zweiten Teilbereich zwischen einer Zugkraft von 600 N und 1800 N sinkt die zulässige Fahrgeschwindigkeit auf 6 km/h ab. In einem dritten Teilbereich zwischen einer Zugkraft von 1800 N und 4500 N sinkt die zulässige Fahrgeschwindigkeit wieder annähernd linear auf 3,5 km/h ab. Die zulässige Fahrstrecke je Stunde liegt bei einer Zugkraft von 1300 N bei 6000 m und nimmt mit zunehmender Zugkraft ab. Bei einer Zugkraft von 4500 N liegt die zulässige Fahrstrecke je Stunde bei 50 m.

Die in der oben beschriebenen Grafik gezeigten Daten sind in der Software der Steuerungseinrichtung des erfindungsgemäßen Schleppers 1, 21 vorhanden, um den Schlepper 1, 21 nach diesen Rahmenbedingungen agieren lassen zu können.

Für die Bestimmung der zulässigen Fahrgeschwindigkeit greift die Steuerungseinrichtung des Schleppers auf eine vorgegeben Verzögerung zurück, beispielsweise eine gewünschte Verzögerung von 3,5 m/sec².

Die aktuelle Zugkraft kann durch die Lastermittlungsvorrichtung 13 des Schleppers 1 ermittelt werden. Dadurch kann die Fahrgeschwindigkeit des Schleppers 1, 21 automatisch abhängig von der jeweiligen Zugkraft begrenzt werden. Außerdem kann die zulässige Fahrstrecke je Stunde automatisch begrenzt oder reduziert werden. Alternativ oder zusätzlich kann dem Fahrer des Schleppers 1, 21 die maximal zulässige Fahrgeschwindigkeit und/oder Fahrstrecke je Stunde abhängig von der Zugkraft angezeigt werden. Bei Überschreiten der maximal zulässigen Fahrgeschwindigkeit und/oder Fahrstrecke je Stunde kann dem Fahrer ein akustisches und/oder visuelles Signal gegeben werden.

Die untere Grafik zeigt die maximale Steigung in Abhängigkeit der Anhängelast. Außerdem zeigt sie den Zusammenhang zwischen Steigung, Anhängelast und Zugkraft. Diese Zusammenhänge sind für Anhängelasten von 0, 0,5 Tonnen, 1 Tonne, 1,5 Tonnen, 2 Tonnen, 3 Tonnen, 4 Tonnen, 5 Tonnen und 6 Tonnen gezeigt. Dabei ist eine Steigung von 0 bis 25 % gezeigt. Die theoretische Zugkraft, die sich ergibt, liegt zwischen 0 und 5000 N.

Bei gleicher Steigung entstehen bei höheren Anhängelasten größere Zugkräfte. Bei gleicher Anhängelast entstehen bei stärkeren Steigungen ebenfalls höhere Zugkräfte.

Bei einer Anhängelast von 0 t liegt die erforderliche Zugkraft bei einer Steigung von 0 % bei 0 N. Bis zu einer Steigung von 25 % steigt die Zugkraft linear auf etwa 2700 N an. Bei einer Anhängelast von 2 t liegt die Zugkraft bei einer Steigung von 0 % bei 500 N. Bis zu einer Steigung von 15 % steigt die Zugkraft linear auf etwa 5000 N an. Bei einer Anhängelast von 6 t liegt die Zugkraft bei einer Steigung von 0 % bei 1400 N. Bis zu einer Steigung von 5,5 % steigt die Zugkraft linear auf 5000 N an. Den Kurven liegt die Annahme einer Zugkraft von ca. 200N pro Tonne Anhängelast zu Grunde.

Bei einer Zugkraft von 5000 N kann mit einer Anhängelast von 1 t eine Steigung von 23,5 %, mit einer Anhängelast von 1,5 t eine Steigung von 18,5 %, mit einer Anhängelast von 2 t eine Steigung von 15 %, mit einer Anhängelast von 3 t eine Steigung von 10 %, mit einer Anhängelast von 4 t eine Steigung von 8,5 %, mit einer Anhängelast von 5 t eine Steigung von 7 % und mit einer Anhängelast von 6 t eine Steigung von 5,5 % überwunden werden.

Die in der oben beschriebenen Grafik gezeigten Daten sind in der Software der Steuerungseinrichtung vorhanden, um den Schlepper nach diesen Rahmenbedingungen agieren lassen zu können. Dadurch, dass bekannt ist, welche Zugkraft bei einer bestimmten Steigung und einer bestimmten Anhängelast vorhanden ist, kann bei bekannter Anhängelast und bekannter Steigung die maximale Fahrgeschwindigkeit bestimmt werden, ohne dass die jeweilige Zugkraft ermittelt werden muss. Dabei kann die Steigung durch einen Fahrtrichtungsneigungssensor 10 bzw. einen Neigungswinkelsensor 24 als Bodenprofilermittlungseinrichtung ermittelt und an die Fahrzeugsteuerung gegeben werden oder mittels Positionsdaten aus einer Datenbank abgerufen werden. Bei dem erfindungsgemäßen Schlepper 1, 21 kann die Fahrgeschwindigkeit des Schleppers 1, 21 automatisch bei gegebener Anhängelast bzw. Last auf einer Ladeplattform abhängig von der Steigung/Gefälle begrenzt bzw. reduziert werden. Bei Überschreiten der maximal zulässigen Fahrgeschwindigkeit bei gegebener Anhängelast bzw. Last auf einer Ladeplattform und befahrener Steigung/Gefälle kann dem Fahrer ein akustisches oder visuelles Signal gegeben werden.

Der erfindungsgemäße Schlepper weist eine Reihe von Vorteilen auf.

Ein Unfallrisiko durch eine zu hohe Fahrgeschwindigkeit für den Fahrer, umstehende Personen, Gebäude, Einrichtungen und der beistehenden oder zu transportierenden Ware wird verringert. Durch die Begrenzung bzw. Reduzierung der Fahrgeschwindigkeit wird ein sicheres Abbremsen ermöglicht. Der erfindungsgemäße Schlepper ermöglicht eine optimale Fahrgeschwindigkeit, die bei hoher Betriebssicherheit eine hohe Transportleitung ermöglicht. Mit dem erfindungsgemäßen Schlepper wird ebenfalls bei einem Fahrer mit geringer Ausbildung ein sicherer Betrieb bei hoher Transportleistung erzielt.

## Patentansprüche

1. Schlepper (1, 21), welcher als ein Lagertechnikflurförderzeug ausgebildet ist, mit einer Ladefläche und einer Anhängevorrichtung (12) an die ein oder mehrere Anhänger angehängt werden können, wobei der Schlepper (1, 21) eine Steuerungseinrichtung zur Begrenzung einer Fahrgeschwindigkeit des Schleppers (1, 21) und eine Bodenprofilermittlungseinrichtung (10, 11; 24) aufweist, wobei die Bodenprofilermittlungseinrichtung (10, 11) eingerichtet ist, ein aktuelles Bodenprofil zu ermitteln und diese Information an die Steuerungseinrichtung weiterzugeben, und die Steuerungseinrichtung eingerichtet ist, die Fahrgeschwindigkeit des Schleppers (1, 21) abhängig von einem durch die Bodenprofilermittlungseinrichtung (10, 11; 24) ermittelten Bodenprofil auf eine maximal zulässige Fahrgeschwindigkeit zu begrenzen, **dadurch gekennzeichnet, dass** die Bodenprofilermittlungseinrichtung einen Winkelsensor (10, 11; 24) zur Ermittlung der Lage des Schleppers (1, 21) relativ zur Lotrechten aufweist.

2. Schlepper (1, 21) nach Anspruch 1, **dadurch gekennzeichnet, dass** der Schlepper (1; 21) eine Lastermittlungseinrichtung (13) aufweist, wobei die Lastermittlungseinrichtung (13) eingerichtet ist, das Gewicht einer Last zu ermitteln und diese Information an die Steuerungseinrichtung weiterzugeben, und die Steuerungseinrichtung eingerichtet ist, die Fahrgeschwindigkeit des Schleppers (1, 21) abhängig von einer durch die Lastermittlungseinrichtung (13) ermittelten Last auf eine maximal zulässige Fahrgeschwindigkeit zu begrenzen.

3. Schlepper (1, 21) nach Anspruch 1 oder 2, **dadurch gekennzeichnet, dass** die Steuerungseinrichtung einen visuellen Signalgeber (4) umfasst.

4. Schlepper (1, 21) nach einem der vorhergehenden Ansprüche, **dadurch gekennzeichnet, dass** die Steuerungseinrichtung einen akustischen Signalgeber umfasst.

5. Schlepper (1, 21) nach einem der vorhergehenden Ansprüche, **dadurch gekennzeichnet, dass** die Steuerungseinrichtung eine mit dem Fahrantrieb in Wirkverbindung stehende Automatik umfasst.

6. Schlepper (1, 21) nach einem der vorhergehenden Ansprüche, **dadurch gekennzeichnet, dass** die Steuerungseinrichtung eingerichtet ist, festzustellen, ob die aktuelle Fahrgeschwindigkeit die maximal zulässige Fahrgeschwindigkeit überschreitet und wenn die zulässige Höchstgeschwindigkeit überschritten ist in einem ersten Schritt, den visuellen Signalgeber (4) zu veranlassen, ein Signal abzugeben, wenn danach die zulässige Höchstgeschwindigkeit noch immer überschritten ist, in einem zweiten Schritt, den akustischen Signalgeber zu veranlassen, ein Signal abzugeben und wenn danach die zulässige Höchstgeschwindigkeit noch immer überschritten ist in einem dritten Schritt eine automatische Begrenzung der Fahrgeschwindigkeit durch die Automatik zu veranlassen.

7. Schlepper (1, 21) nach einem der vorhergehenden Ansprüche, **dadurch gekennzeichnet, dass** die Steuerungseinrichtung bei einer automatischen Begrenzung der Fahrgeschwindigkeit durch die Automatik ein Ansteuersignal an ein Bremslicht des Schleppers (1, 21) ausgibt.

8. Schlepper (1, 21) nach einem der Ansprüche 2 bis 7, **dadurch gekennzeichnet, dass** die Lastermittlungseinrichtung eingerichtet ist, eine Kraft in einer Anhängevorrichtung (12), insbesondere einer Anhängerkupplung, des Schleppers (1, 21) zu messen.

9. Schlepper (1, 21) nach einem der Ansprüche 2 bis 8, **dadurch gekennzeichnet, dass** die Lastermittlungseinrichtung eingerichtet ist, eine Kraft zu messen, die eine Last auf eine Ladefläche des Schleppers (1, 21) ausübt.

10. Schlepper (1, 21) nach einem der vorhergehenden Ansprüche, **dadurch gekennzeichnet, dass** die Bodenprofilermittlungseinrichtung einen Empfänger für ein Ortungssystem zum Empfangen von Positionsinformationen aufweist und eingerichtet ist, mit Hilfe der empfangenen Positionsinformationen einen Ausschnitt eines Bodenprofils aus einem Speicher abzurufen.

11. Schlepper (1, 21) nach einem der vorhergehenden Ansprüche, **dadurch gekennzeichnet, dass** die Steuerungseinrichtung eingerichtet ist, die Fahrgeschwindigkeit des Schleppers (1, 21) abhängig von der Beschaffenheit der Fahrbahnoberfläche zu steuern.

## Claims

1. Tractor (1, 21), which is configured as a warehouse industrial truck, having a loading area and a trailer device (12) onto which one or more trailers may be hitched, wherein the tractor (1, 21) has a control device for limiting a velocity of the tractor (1, 21) and a ground profile-determining device (10, 11; 24), wherein the ground profile-determining device (10, 11) is configured to determine a current ground profile and to pass on this information to the control device, and the control device is configured to limit the velocity of the tractor (1, 21) to a maximum permissible velocity in accordance with a ground profile determined by the ground profile-determining device (10, 11; 24), **characterized in that** the ground profile-determining device has an angle sensor (10, 11; 24) for determining the position of the tractor (1, 21) relative to the vertical.

2. Tractor (1, 21) according to Claim 1, **characterized in that** the tractor (1; 21) has a load-determining device (13), wherein the load-determining device (13) is configured to determine the weight of a load and to pass on this information to the control device, and the control device is configured to limit the velocity of the tractor (1, 21) to a maximum permissible velocity in accordance with a load determined by the load-determining device (13).

3. Tractor (1, 21) according to Claim 1 or 2, **characterized in that** the control device comprises a visual signal transmitter (4).

4. Tractor (1, 21) according to one of the preceding claims, **characterized in that** the control device comprises an acoustic signal transmitter.

5. Tractor (1, 21) according to one of the preceding claims, **characterized in that** the control device comprises an automatic device which is operatively connected to the traction drive.

6. Tractor (1, 21) according to one of the preceding claims, **characterized in that** the control device is configured to detect whether the current velocity exceeds the maximum permissible velocity, and if the highest permissible velocity is exceeded, to cause the visual signal transmitter (4) to output a signal in a first step, if the highest permissible velocity is still exceeded after this, to cause the acoustic signal transmitter to output a signal in a second step, and if the highest permissible velocity is still exceeded after this, to cause automatic limitation of the velocity by the automatic device in a third step.

7. Tractor (1, 21) according to one of the preceding claims, **characterized in that** during automatic limitation of the velocity by the automatic device the control device outputs an actuation signal to a brake light of the tractor (1, 21).

8. Tractor (1, 21) according to one of Claims 2 to 7, **characterized in that** the load-determining device is configured to measure a force in a trailer device (12), in particular a trailer hitch, of the tractor (1, 21).

9. Tractor (1, 21) according to one of Claims 2 to 8, **characterized in that** the load-determining device is configured to measure a force which exerts a load on a loading area of the tractor (1, 21).

10. Tractor (1, 21) according to one of the preceding claims, **characterized in that** the ground profile-determining device has a receiver for a locating system for receiving position information and is configured to retrieve an extract of a ground profile from a memory using the received position information.

11. Tractor (1, 21) according to one of the preceding claims, **characterized in that** the control device is configured to control the velocity of the tractor (1, 21) in accordance with the quality of the underlying surface.

## Revendications

1. Tracteur (1, 21), qui est conçu comme un chariot de manutention pour technique de stockage, comprenant une surface de chargement et un arrangement d'attelage (12) auquel une ou plusieurs remorques peuvent être attachées, le tracteur (1, 21) possédant un dispositif de commande destiné à limiter une vitesse de déplacement du tracteur (1, 21) et un dispositif de détermination du profil de sol (10, 11 ; 24), le dispositif de détermination du profil de sol (10, 11) étant conçu pour déterminer un profil de sol actuel et retransmettre cette information au dispositif de commande, et le dispositif de commande étant conçu pour limiter la vitesse de déplacement du tracteur (1, 21) à une vitesse de déplacement maximale autorisée en fonction d'un profil de sol déterminé par le dispositif de détermination du profil de sol (10, 11 ; 24), **caractérisé en ce que** le dispositif de détermination du profil de sol possède un capteur d'angle (10, 11 ; 24) destiné à déterminer une position du tracteur (1, 21) par rapport à la verticale.

2. Tracteur (1, 21) selon la revendication 1, **caractérisé en ce que** le tracteur (1 ; 21) possède un dispositif de détermination de charge (13), le dispositif de détermination de charge (13) étant conçu pour déterminer une charge et retransmettre cette information au dispositif de commande, et le dispositif de commande étant conçu pour limiter la vitesse de déplacement du tracteur (1, 21) à une vitesse de déplacement maximale autorisée en fonction d'une charge déterminée par le dispositif de détermination de charge (13).

3. Tracteur (1, 21) selon la revendication 1 ou 2, **caractérisé en ce que** le dispositif de commande comporte un transmetteur de signal visuel (4).

4. Tracteur (1, 21) selon l'une des revendications précédentes, **caractérisé en ce que** le dispositif de commande comporte un transmetteur de signal sonore.

5. Tracteur (1, 21) selon l'une des revendications précédentes, **caractérisé en ce que** le dispositif de commande comporte un système automatique en liaison active avec le mécanisme de propulsion.

6. Tracteur (1, 21) selon l'une des revendications précédentes, **caractérisé en ce que** le dispositif de commande est conçu pour déterminer si la vitesse de déplacement actuelle dépasse la vitesse de déplacement maximale autorisée et, lorsque la vitesse maximale autorisée est dépassée, dans une première étape, amener le transmetteur de signal visuel (4) à émettre un signal, si après ça la vitesse maximale autorisée est toujours dépassée, dans une deuxième étape, amener le transmetteur de signal sonore à émettre un signal et si, après ça, la vitesse maximale autorisée est toujours dépassée, dans une troisième étape, provoquer une limitation automatique de la vitesse de déplacement par le système automatique.

7. Tracteur (1, 21) selon l'une des revendications précédentes, **caractérisé en ce que** le dispositif de commande délivre un signal de commande à un feu-stop du tracteur (1, 21) dans le cas d'une limitation automatique de la vitesse de déplacement par le système automatique.

8. Tracteur (1, 21) selon l'une des revendications 2 à 7, **caractérisé en ce que** le dispositif de détermination de charge est conçu pour mesurer une force dans un arrangement d'attelage (12), notamment un attelage de remorque, du tracteur (1, 21).

9. Tracteur (1, 21) selon l'une des revendications 2 à 8, **caractérisé en ce que** le dispositif de détermination de charge est conçu pour mesurer une force qui exerce une force sur une surface de chargement du tracteur (1, 21).

10. Tracteur (1, 21) selon l'une des revendications précédentes, **caractérisé en ce que** le dispositif de détermination du profil de sol possède un récepteur pour un système de localisation destiné à recevoir des informations de position et est conçu pour, à l'aide des informations de position reçues, invoquer depuis une mémoire une portion d'un profil de sol.

11. Tracteur (1, 21) selon l'une des revendications précédentes, **caractérisé en ce que** le dispositif de commande est conçu pour commander la vitesse de déplacement du tracteur (1, 21) en, fonction de la nature de la surface de la chaussée.
